# EUROPÄISCHE PATENTSCHRIFT

(11) **EP 4 095 869 B1**
(45) Veröffentlichungstag und Bekanntmachung des Hinweises auf die Patenterteilung: **13.03.2024**
(21) Anmeldenummer: 22165319.9
(22) Anmeldetag: 30.03.2022
(51) Int. Cl.: H01F 5/02, H01F 5/04, H01F 7/06

(54) **SPULENVORRICHTUNG**
COIL DEVICE
DISPOSITIF BOBINE

(30) Priorität: 20.04.2021 DE 102021109885
(43) Veröffentlichungstag der Anmeldung: 30.11.2022
(73) Patentinhaber: Thomas Magnete GmbH, 57562 Herdorf (DE)
(72) Erfinder: Mockenhaupt, Jörg, 57578 Elkenroth (DE)

(56) Entgegenhaltungen:
- DE-A1- 10 011 266
- JP-A- H1 187 133
- JP-U- S5 370 352
- US-A- 4 318 069

## Beschreibung

Die Erfindung betrifft eine Spulenvorrichtung zur Aufnahme zumindest einer elektrischen Wicklung. Die Spulenvorrichtung ist insbesondere zur Anwendung in einer Polrohrbaugruppe eines Magnetventils, eines Aktors oder einer Pumpe geeignet.

Aus dem Stand der Technik, wie etwa aus der DE 10 011 266 A1 oder DE 10 2008 034 609 A1, sind Spulenvorrichtungen bekannt. Der Spulenkörper aus DE 10 011 266 A1 weist eine zweigeteilte Hülse auf, wobei ein Einzelteil dessen Anschlusskontakte für eine Wicklung einer elektrischen Spule aufweist. Dieses die Anschlusskontakte aufweisende Einzelteil wird entlang einer Längsachse des Spulenkörpers in ein zweites Einzelteil gesteckt. Dies hat den Nachteil, dass ein großer Platzbedarf in der horizontalen Richtung der Spulenvorrichtung dabei entsteht. Des Weiteren wird dabei keine besonders sichere Verbindung zwischen den Einzelteilen der zweigeteilten Hülse bereitgestellt.

Es ist Aufgabe der Erfindung, eine Spulenvorrichtung mit hoher Festigkeit bereitzustellen, für welche ein geringer Platzbedarf für die Herstellung derselben benötigt wird und welche eine mechanisch sowie elektrisch sichere Verbindung der elektrischen Wicklung nach außen ermöglicht.

Die Lösung dieser Aufgaben erfolgt durch eine Spulenvorrichtung zur Aufnahme zumindest einer elektrischen Wicklung. Die Spulenvorrichtung weist einen Spulenkörper und zumindest einen Wicklungsanschluss auf. Dabei weist der Wicklungsanschluss einen Anschlussabschnitt auf, welcher eingerichtet ist, in einem umwickelten Zustand des Spulenkörpers zumindest ein Ende der elektrischen Wicklung zu halten. Des Weiteren weist der zumindest eine Wicklungsanschluss zumindest einen Befestigungsabschnitt auf, welcher eingerichtet ist, im umwickelten Zustand zwischen einem Außenflächenabschnitt des Spulenkörpers und der elektrischen Wicklung geklemmt zu sein.

Die Unteransprüche haben bevorzugte Weiterbildungen der Erfindung zum Inhalt.

Dadurch, dass der Wicklungsanschluss zwischen einem Außenflächenabschnitt des Spulenkörpers und der elektrischen Wicklung geklemmt ist, kann eine sichere mechanische Verbindung, insbesondere eine kraftschlüssige Verbindung, zwischen dem Wicklungsanschluss und dem Spulenkörper bereitgestellt werden. Des Weiteren wird diese Verbindung bei dem Aufspulen der elektrischen Wicklung auf den Spulenkörper realisiert, sodass weitere Prozessschritte hierfür nicht notwendig sind.

Die Spulenvorrichtung wird bevorzugt in einer Polrohrbaugruppe eines Magnetventils, eines Aktors oder einer Pumpe eingesetzt.

Vorteilhafterweise ist der Spulenkörper zumindest größtenteils zylindrisch, insbesondere hohlzylindrisch. Alternativ ist der Spulenkörper vorzugsweise ein Prisma, beispielsweise ein Quader, insbesondere eine quadratische Säule oder ein Würfel, und ist insbesondere ein Hohlprisma.

Vorzugsweise sind der Spulenkörper und der zumindest eine Wicklungsanschluss zweitteilig gebildet. Mit anderen Worten sind der Spulenkörper und der zumindest eine Wicklungsanschluss separate Elemente, welche bei der Herstellung der Spulenvorrichtung zusammengefügt werden. In einer besonderen Ausführungsform, in welcher die Spulenvorrichtung eine Mehrzahl von Wicklungsanschlüssen aufweist, sind die mehreren Wicklungsanschlüsse bevorzugt zwei- bzw. mehrteilig, sodass diese separate Elemente sind. In einer weiteren beispielhaften Ausgestaltung sind die mehreren Wicklungsanschlüsse gemeinsam einteilig gebildet, sodass diese gemeinsam ein einziges Element bilden, welches separat von dem Spulenkörper ist. Durch die mehrteilige Ausgestaltung der Spulenvorrichtung lässt sich die Spulenvorrichtung vorteilhafterweise besonders leicht an verschiedene Anwendungen anpassen, insbesondere durch Austauschen des Wicklungsanschlusses. Andererseits können die Prozessschritte vorzugsweise bei der Herstellung der Spulenvorrichtung zum größten Teil unabhängig von solchen verschiedenen Anwendungen beibehalten werden, da lediglich ein anderer Wicklungsanschluss eingesetzt wird.

Der Anschlussabschnitt des Wicklungsanschlusses ist bevorzugt dazu eingerichtet, das zumindest eine Ende, insbesondere beide Enden, der elektrischen Wicklung klemmend zu halten. Dadurch kann die elektrische Wicklung an dem Anschlussabschnitt fixiert werden, während sie um den Spulenkörper und den Befestigungsabschnitt des Wicklungsanschlusses gewickelt wird.

In einer bevorzugten Ausführungsform weist der Befestigungsabschnitt eine dem Außenflächenabschnitt des Spulenkörpers entsprechende Form auf. Dabei liegt der Befestigungsabschnitt in einem mit dem Spulenkörper zusammengefügten Zustand, insbesondere im umwickelten Zustand, zumindest teilweise an dem Außenflächenabschnitt des Spulenkörpers an.

Bevorzugt ist der Befestigungsabschnitt des zumindest einen Wicklungsanschlusses derart zwischen dem Außenflächenabschnitt des Spulenkörpers und der elektrischen Wicklung geklemmt, dass eine Klemmkraft, welche von der elektrischen Wicklung ausgeübt wird, entlang einer ersten Richtung senkrecht zu einer Längsachse des Spulenkörpers wirkt. Der Befestigungsabschnitt weist dabei insbesondere eine untere Fläche auf, welche in der ersten Richtung dem Spulenkörper zugewandt ist. Des Weiteren weist der Befestigungsabschnitt vorzugsweise eine obere Fläche auf, welche entlang der ersten Richtung der aufgewickelten Wicklung zugewandt ist. In dem besonderen Fall, in welchem der Spulenkörper zylindrisch oder hohlzylindrisch ist, wird die vorgenannte erste Richtung auch als "Radialrichtung" bezeichnet.

Vorzugsweise liegt die untere Fläche des Befestigungsabschnitts zumindest teilweise an dem Außenflächenabschnitt des Spulenkörpers an. Die obere Fläche des Befestigungsabschnitts liegt vorzugsweise zumindest teilweise im umwickelten Zustand an der elektrischen Wicklung an.

Vorzugsweise ist der Außenflächenabschnitt des Spulenkörpers in der Richtung senkrecht zur Längsachse des Spulenkörpers vertieft. Dabei entspricht eine Höhe der Vertiefung des Außenflächenabschnitts vorzugsweise einer Dicke des Befestigungsabschnitts. Mit anderen Worten passt der Befestigungsabschnitt vorteilhafterweise in die Vertiefung des Außenflächenabschnitts des Spulenkörpers. Dadurch bilden der Befestigungsabschnitt des Wicklungsanschlusses und der Außenflächenabschnitt des Spulenkörpers eine gemeinsame, nahezu oder vollständig übergangsfreie, insbesondere glatte Oberfläche. Somit können Fehlstellungen oder Beulen in der elektrischen Wicklung im umwickelten Zustand vermieden werden.

In einer besonders vorteilhaften Ausführungsform ragt der Anschlussabschnitt des Wicklungsanschlusses im zusammengefügten Zustand, insbesondere im umwickelten Zustand, von dem Spulenkörper vor. Dabei ragt der Anschlussabschnitt insbesondere im Wesentlichen senkrecht zur Längsachse des Spulenkörpers von dem Spulenkörper vor.

Vorzugsweise weist der Spulenkörper zumindest einen Flansch auf, wobei der Anschlussabschnitt des Wicklungsanschlusses zumindest teilweise an dem Flansch anliegt.

Vorzugsweise weist der Anschlussabschnitt des Wicklungsanschlusses eine erste Fläche auf, welche im zusammengefügten oder im umwickelten Zustand parallel zum zumindest einen Flansch verläuft und zumindest teilweise an diesem anliegt.

Vorzugsweise ist der Anschlussabschnitt, insbesondere die erste Fläche des Anschlussabschnitts, entlang der Längsrichtung des Spulenkörpers zwischen dem zumindest einen Flansch und der elektrischen Wicklung im umwickelten Zustand angeordnet. Bevorzugt weist der Spulenkörper zwei Flansche auf. Dabei ist die elektrische Wicklung im umwickelten Zustand des Spulenkörpers zwischen den beiden Flanschen angeordnet bzw. gewickelt. Der zumindest eine Wicklungsanschluss, insbesondere alle Wicklungsanschlüsse, sind dabei vorzugsweise entlang der Längsrichtung zwischen den beiden Flanschen angeordnet.

In einer weiteren bevorzugten Ausführungsform ist der Anschlussabschnitt mittels einer Nut-Schienen-Verbindung an dem Flansch befestigt.

Bevorzugt weist der Flansch des Spulenkörpers eine Nut auf, wobei der Anschlussabschnitt des Wicklungsanschlusses eine Schiene aufweist, welche eingerichtet ist, in die Nut des Flansches zu passen. Alternativ oder zusätzlich dazu weist der Flansch des Spulenkörpers eine Schiene auf, wobei der Anschlussabschnitt des Wicklungsanschlusses eine Nut aufweist, in welche die Schiene des Flansches greift. Vorzugsweise weist die Spulenvorrichtung eine Mehrzahl von solchen Nut-Schienen-Verbindungen auf.

Bevorzugt verlaufen die Nut und die Schiene der Nut-Schienen-Verbindung in einer Richtung senkrecht zu einer Längsrichtung des Spulenkörpers. Die Längsrichtung ist dabei parallel zur Längsachse des Spulenkörpers. Dadurch wird ermöglicht, dass die Zusammenfügung des Wicklungsanschlusses mit dem Spulenkörper entlang der Richtung senkrecht zur Längsachse durchgeführt werden kann, womit ein Platzbedarf entlang der Längsrichtung bei der Herstellung der Spulenvorrichtung verringert wird.

In einer bevorzugten Ausführungsform weist der Flansch einen Ausschnitt auf, wobei der Anschlussabschnitt des Wicklungsanschlusses den Ausschnitt des Flansches hintergreift.

Bevorzugt weist der Anschlussabschnitt des Wicklungsanschlusses eine Hintergreifung auf, welche bevorzugt als Vorsprung des Anschlussabschnitts ausgebildet ist, welche den Ausschnitt des Flansches hintergreift. Dadurch ist eine Formschlussverbindung zwischen dem Flansch und dem Wicklungsanschluss gebildet.

Alternativ oder zusätzlich dazu bilden eine Nut des Anschlussabschnitts und der Ausschnitt des Flansches eine Nut-Schienen-Verbindung. Bevorzugt weist der Ausschnitt zumindest eine Schiene auf, welche in eine Nut des Anschlussabschnitts greift. Alternativ oder zusätzlich dazu weist der Ausschnitt zumindest eine Nut auf, in welche eine Schiene des Anschlussabschnitts greift.

Vorteilhafterweise liegt der Ausschnitt des Flansches in einer Ebene, nämlich der Ebene des Flansches, welche vorzugsweise senkrecht zur Längsachse des Spulenkörpers ist. Mit anderen Worten ist der zumindest eine Flansch bevorzugt senkrecht auf dem Spulenkörper und an einem Ende (in Längsrichtung) des Spulenkörpers angeordnet. In dem beispielhaften Fall, dass der zumindest eine Flansch kreisförmig bzw. ringförmig ist, ist der Ausschnitt des Flansches ein Kreissektor mit Seitenflächen, welche entlang der ersten Richtung zum Spulenkörper hin verjüngt sind. Alternativ dazu weist der Ausschnitt Seitenflächen auf, welche senkrecht zur Längsachse verlaufen und im Wesentlichen parallel zueinander sind.

Bevorzugt weisen die Seitenflächen des Ausschnittes des Flansches die Nut oder die Schiene der jeweiligen Nut-Schienen-Verbindung des Ausschnittes des Flansches auf.

Vorzugsweise weist der Flansch eine Mehrzahl von Ausschnitten auf, wobei in jedes dieser Ausschnitte ein Wicklungsanschluss mittels des Anschlussabschnitts eingefügt ist. Des Weiteren weist bevorzugt jeder Flansch zumindest einen Ausschnitt auf, wobei bevorzugt in jeweils jeden Ausschnitt ein Wicklungsanschluss eingefügt ist oder wobei vorzugsweise zumindest ein Wicklungsanschluss eine Mehrzahl von Anschlussschnitten aufweist, welche jeweils in einem Ausschnitt eines der Flansche eingefügt ist.

In einer besonderen Ausführungsform sind der zumindest eine Flansch und der Spulenkörper einteilig gebildet. Vorteilhafterweise geht dabei der Ausschnitt des Flansches in die Vertiefung des Außenflächenabschnitts des Spulenkörpers über.

Vorzugsweise ist der Außenflächenabschnitt des Spulenkörpers größtenteils ausgeschnitten. Dabei bilden Ränder des ausgesparten Außenflächenabschnitts eine Auflagefläche für den Befestigungsabschnitt des Wicklungsanschlusses. Dies ist ein Beispiel für ein teilweises Anliegen des Befestigungsabschnitts an dem Außenflächenabschnitt, nämlich an den Rändern des ausgesparten Außenflächenabschnitts.

Bevorzugt weist der Anschlussabschnitt zumindest einen Vorsprung auf, welcher eingerichtet ist, das zumindest eine Ende der Wicklung zu halten, insbesondere klemmend zu halten. Des Weiteren weist der Anschlussabschnitt vorzugsweise zumindest eine in oder an dem Vorsprung angeordnete Aufnahme für einen Kontaktanschluss auf, wobei der Kontaktanschluss in einem in der Aufnahme eingeführten Zustand die Wicklung kontaktiert.

Vorteilhafterweise wird das zumindest eine Ende der Wicklung um den Vorsprung gewickelt, insbesondere derart, dass das Ende der Wicklung von dem Vorsprung gegen eine Zugkraft gehalten wird. Dabei weist der zumindest eine Vorsprung vorzugsweise eine Struktur zum Halten der elektrischen Wicklung auf. Solche Strukturen sind beispielsweise Nuten oder Schlitze, Haken, insbesondere Widerhaken, und/oder eine Vergabelung des Vorsprungs, um welche die elektrische Wicklung gewickelt werden kann.

Alternativ oder zusätzlich dazu kann die Klemmwirkung dadurch erreicht werden, dass das entsprechende Ende der Wicklung selbstklemmend um den Vorsprung gewickelt wird. Beispielsweise wird dabei die Wicklung zunächst entlang einer Längserstreckung des entsprechenden Vorsprungs gelegt und daraufhin um den Vorsprung und um diesen ersten gelegten Abschnitt der Wicklung gewickelt.

Vorzugsweise weist der Anschlussabschnitt zwei Vorsprünge auf, welche in einer Richtung senkrecht zur Längsachse des Spulenkörpers vorspringen und insbesondere eine T-Form oder eine Form eines Kreuzes bilden.

Vorzugsweise weist der Anschlussabschnitt des Wicklungsanschlusses einen Körperabschnitt auf, welcher senkrecht zu der Längsachse des Spulenkörpers im zusammengefügten Zustand von dem Spulenkörper bzw. dem Befestigungsabschnitt vorragt. Dabei ragt der zumindest eine Vorsprung insbesondere senkrecht vom Körperabschnitt des Anschlussabschnitts vor. Vorteilhafterweise ragt der Körperabschnitt senkrecht zur Längsachse des Spulenkörpers über den Flansch.

Vorteilhafterweise weist der Kontaktanschluss zumindest eine Schneide auf, welche eingerichtet ist, eine Isolation der Wicklung durchzuschneiden, um im elektrischen Kontakt mit einem elektrischen Leiter der Wicklung zu sein.

Vorzugsweise weist der Kontaktanschluss zumindest eine Schweißlasche zum kraft- und stoffschlüssigen Verbinden der elektrischen Wicklung mit dem Kontaktanschluss auf.

Die Spulenvorrichtung umfasst bevorzugt zumindest einen Kontaktanschluss auf. Weiter bevorzugt umfasst die Spulenvorrichtung die zumindest eine elektrische Wicklung.

Vorzugsweise weist der Anschlussabschnitt des Wicklungsanschlusses zumindest einen entlang der Längsrichtung des Spulenkörpers vorragenden Anschlussabschnittsvorsprung auf. Der Anschlussabschnittsvorsprung ragt dabei in Längsrichtung zur elektrischen Wicklung im umwickelten Zustand vor und ist insbesondere flächig ausgestaltet. Des Weiteren ist der Anschlussabschnittsvorsprung bevorzugt keilförmig gebildet und weist dadurch eine Ablagefläche für die elektrische Wicklung auf. Die Ablagefläche dient dabei insbesondere zum Ablegen einer letzten Umwicklung der elektrischen Wicklung um den Spulenkörper. Vorzugsweise weist der Anschlussabschnitt zwei Anschlussabschnittsvorsprünge auf. Ein möglicher zweiter Anschlussabschnittsvorsprung ist dabei derart angeordnet, dass er zusammen mit dem vorgenannten (ersten) Anschlussabschnittsvorsprung einen Kanal bildet, in welchem die letzte Umwicklung der elektrischen Wicklung abgelegt wird.

Bevorzugt sind der Anschlussabschnitt, der zumindest eine Befestigungsabschnitt und der Körperabschnitt des Wicklungsanschlusses einteilig gebildet.

Weitere Einzelheiten, Vorteile und Merkmale der vorliegenden Erfindung ergeben sich aus nachfolgender Beschreibung von Ausführungsbeispielen anhand der Zeichnung. Es zeigt:
Fig. 1 eine perspektivische Darstellung einer Spulenvorrichtung gemäß einer ersten Ausführungsform der vorliegenden Erfindung,
Fig. 2 eine weitere perspektive schematische Ansicht der Spulenvorrichtung gemäß der ersten Ausführungsform der vorliegenden Erfindung,
Fig. 3 eine weitere perspektivische schematische Ansicht der Spulenvorrichtung gemäß der ersten Ausführungsform der vorliegenden Erfindung,
Fig. 4 eine perspektivische schematische Ansicht einer Spulenvorrichtung gemäß einer zweiten Ausführungsform der vorliegenden Erfindung,
Fig. 5 eine perspektivische schematische Ansicht einer Spulenvorrichtung gemäß einer dritten Ausführungsform der vorliegenden Erfindung,
Fig. 6 eine perspektivische schematische Ansicht einer Spulenvorrichtung gemäß einer vierten Ausführungsform der vorliegenden Erfindung,
Fig. 7 eine perspektivische schematische Ansicht einer Spulenvorrichtung gemäß einer fünften Ausführungsform der vorliegenden Erfindung,
Fig. 8 eine perspektivische schematische Ansicht einer Spulenvorrichtung gemäß einer sechsten Ausführungsform der vorliegenden Erfindung, und
Fig. 9 eine perspektivische schematische Ansicht einer Spulenvorrichtung gemäß einer siebten Ausführungsform der vorliegenden Erfindung.

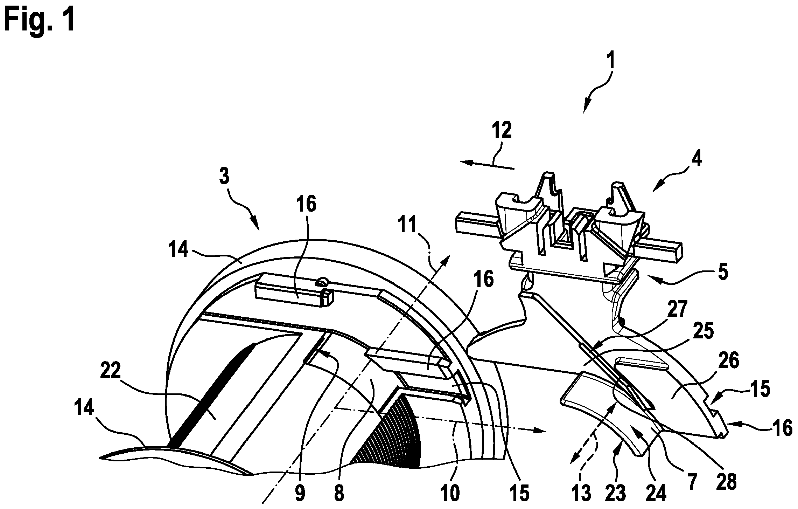

Die Figuren 1 bis 3 zeigen jeweils eine perspektivische Darstellung einer Spulenvorrichtung 1 gemäß einer ersten Ausführungsform der vorliegenden Erfindung. Insbesondere zeigen die Figuren 1 bis 3 einen Zusammenfügungs- und Umwicklungsablauf bei der Herstellung der Spulenvorrichtung 1 zur Erläuterung der Funktionsweise der Spulenvorrichtung 1.

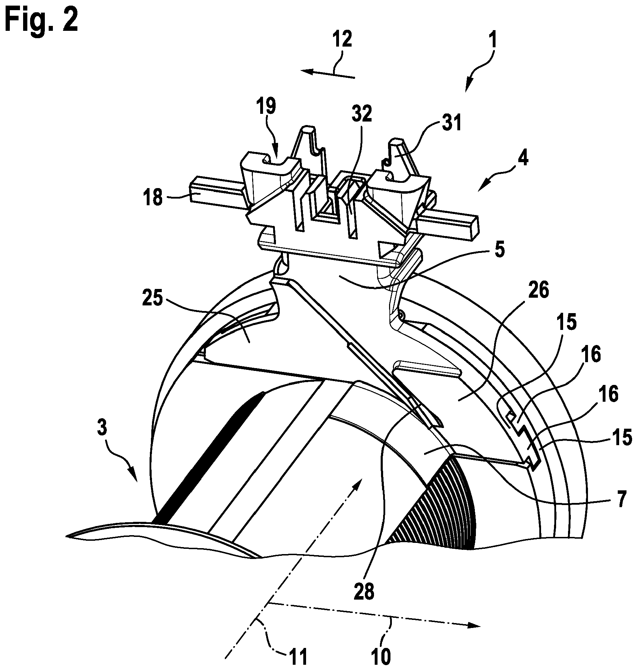

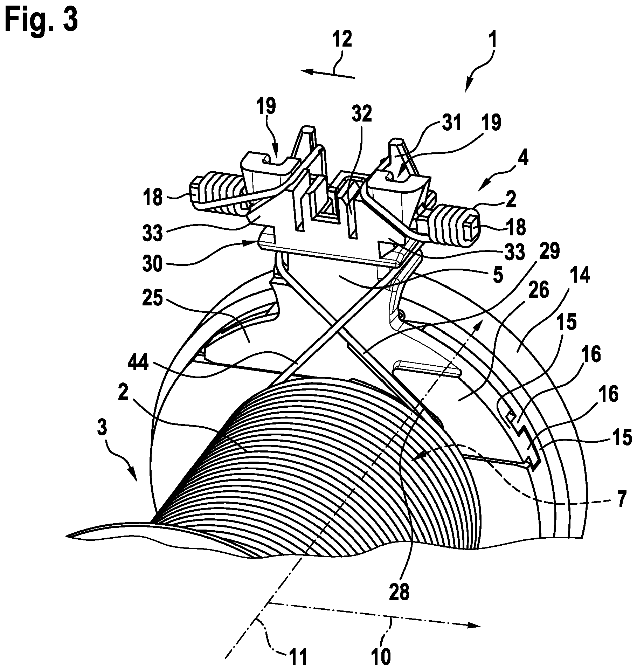

Die Figur 1 zeigt einen nicht zusammengefügten Zustand der Spulenvorrichtung 1. Die Figur 2 zeigt einen zusammengefügten Zustand der Spulenvorrichtung 1. Die Figur 3 zeigt einen umwickelten Zustand der Spulenvorrichtung 1.

Wie der Figur 1 zu entnehmen ist, weist die Spulenvorrichtung 1 einen Spulenkörper 3 und einen Wicklungsanschluss 4 auf. Wie nachstehend mit Bezug auf Figur 3 erläutert wird, ist der Wicklungsanschluss 4 eingerichtet, eine elektrische Wicklung 2 zu halten und Kontaktstellen für die elektrische Wicklung bereitzustellen.

Der Spulenkörper 3 ist hierbei hohlzylindrisch und weist zwei Flansche 14 auf, welche entlang einer Längsachse 11 des Spulenkörpers 3 an gegenüberliegenden Enden des Spulenkörpers 3 angeordnet sind. Die Flansche 14 sind insbesondere einteilig mit einem zylindrischen Abschnitt 22 des Spulenkörpers 3 gebildet.

Wie ein Vergleich der Figuren 1 und 2 zeigt, wird der Wicklungsanschluss 4 entlang einer Richtung 12 senkrecht zu einer Längsrichtung des Spulenkörpers 3 bewegt, um diesen auf den Spulenkörper 3 anzubringen. Die Längsrichtung verläuft parallel zur Längsachse 11. Hierfür weisen der Spulenkörper 3 und der Wicklungsanschluss 4 eine gemeinsame Nut-Schienen-Verbindung 15, 16 auf. Der Wicklungsanschluss 4 weist Nuten 15 zur Aufnahme von Schienen 16 des Spulenkörpers 3 auf. Des Weiteren weist der Wicklungsanschluss 4 eine Schiene 16 auf, welche in eine Nut 15 des Spulenkörpers 3 eingeführt wird. Die Nut 15 und die Schienen 16 des Spulenkörpers 3 sind hierbei als Teil des Flansches 14 ausgebildet. Die Nuten 15 und die Schienen 16 verlaufen hierbei entlang der Richtung 12 senkrecht zur Längsrichtung des Spulenkörpers 3.

Durch das Ineinandergreifen der Nuten 15 und der Schienen 16 wird der Wicklungsanschluss 4 an dem Spulenkörper 3 zunächst lose befestigt beziehungsweise arretiert. Dabei liegt der Anschlussabschnitt 5 teilweise an dem Flansch 14 an.

Wie ein Vergleich der Figuren 2 und 3 zeigt wird daraufhin eine elektrische Wicklung 2 um den Spulenkörper 3 gewickelt. Dabei wird ein Befestigungsabschnitt 7 (siehe Figuren 1 und 2) zwischen der elektrischen Wicklung 2 und einem Außenflächenabschnitt 8 (siehe Figur 1) des Spulenkörpers 3 geklemmt. Dabei ist der Befestigungsabschnitt 7 des Wicklungsanschlusses 4 derart zwischen dem Außenflächenabschnitt 8 des Spulenkörpers 3 und der elektrischen Wicklung 2 geklemmt, dass eine Klemmkraft, welche von der elektrischen Wicklung 2 ausgeübt wird, entlang einer Radialrichtung 10 senkrecht zu der Längsachse 11 des Spulenkörpers 3 wirkt.

Der Befestigungsabschnitt 7 weist dabei eine untere Fläche 23 auf, welche in der Radialrichtung 10 dem Spulenkörper 3 zugewandt ist. Des Weiteren weist der Befestigungsabschnitt 7 eine obere Fläche 24 auf, welche entlang der Radialrichtung 10 des Spulenkörpers 3 der aufgewickelten Wicklung 2 (siehe Figur 3) zugewandt ist. Die untere Fläche 23 des Befestigungsabschnitts 7 liegt vollständig an dem Außenflächenabschnitt 8 des Spulenkörpers 3 an. Die obere Fläche 24 des Befestigungsabschnitts 7 liegt im umwickelten Zustand (Figur 3) an der elektrischen Wicklung 2 an.

Mit Bezug wieder auf Figur 1 weist der Befestigungsabschnitt 7 des Wicklungsanschlusses 4 eine dem Außenflächenabschnitt 8 des Spulenkörpers 3 entsprechende Form auf. Hierbei weisen sowohl der Außenflächenabschnitt 8 des Spulenkörpers 3 sowie der Befestigungsabschnitt 7 des Wicklungsanschlusses 4 eine gekrümmte Viereck-Form auf.

Der Außenflächenabschnitt 8 des Spulenkörpers 3 weist außerdem eine Vertiefung 9 auf. Mit anderen Worten ist der Außenflächenabschnitt 8 des Spulenkörpers 3 gegenüber weiteren Abschnitten oder Teilen, insbesondere gegenüber einem zylindrischen Abschnitt 22 des Spulenkörpers 3, entlang der Radialrichtung 10 senkrecht zur Längsachse 11 des Spulenkörpers 3 vertieft.

Des Weiteren weist der Befestigungsabschnitt 7 des Wicklungsanschlusses 4 eine Dicke 13 auf. Die Dicke 13 des Befestigungsabschnitts 7 entspricht hierbei im Wesentlichen der Tiefe der Vertiefung 9 gegenüber dem zylindrischen Abschnitt 22 des Spulenkörpers 3 bzw. des Außenflächenabschnitts 8. Wie der Figur 2 zu entnehmen ist entsteht dadurch eine nahezu oder vollständig übergangsfreie Oberfläche, gebildet durch den Befestigungsabschnitt 7 und dem zylindrischen Abschnitt 22 des Spulenkörpers 3. "Übergangsfrei" bedeutet hierbei, dass der Befestigungsabschnitt 7 entlang der Radialrichtung 10 nicht aus der Vertiefung 9 des Außenflächenabschnitts 8 vorragt, sodass eine glatte Oberfläche gebildet wird. Dadurch wird vermieden, dass Beulen oder Knicke in der aufgewickelten elektrischen Wicklung 2 entstehen.

Wie insbesondere die Figuren 1 und 3 zeigen, weist der Wicklungsanschluss 4, genauer der Anschlussabschnitt 5 des Wicklungsanschlusses 4, zwei entlang der Längsrichtung 11 des Spulenkörpers 3 vorragende Anschlussabschnittsvorsprünge 25, 26 auf. Die Anschlussabschnittsvorsprünge 25, 26 ragen dabei in Längsrichtung 11 zur elektrischen Wicklung 2 im umwickelten Zustand vor und sind insbesondere flächig ausgestaltet.

Ein erster Anschlussabschnittsvorsprung 25 der Anschlussabschnittsvorsprünge 25, 26 ist keilförmig gebildet und weist dadurch eine Ablagefläche 27 für die elektrische Wicklung 2 auf. Die Ablagefläche 27 dient dabei zum Ablegen eines ersten Endes 29 der elektrischen Wicklung 2 um den Spulenkörper 3. Das erste Ende 29 ist hierbei ein Initialdrahtabschnitt, welcher zur Einleitung der ersten Umwicklung des Spulenkörpers 3 dient.

Der zweite Anschlussabschnittsvorsprung 26 ist derart angeordnet, dass er zusammen mit dem ersten Anschlussabschnittsvorsprung 25 einen Kanal 28 bildet, in welchem das erste Ende 29 der elektrischen Wicklung 2 eingefügt wird (Figur 3).

Wie außerdem der Figur 3 zu entnehmen ist wird die elektrische Wicklung 2 um den Anschlussabschnitt 5 gewickelt. Der Anschlussabschnitt 5 des Wicklungsanschlusses 4 weist einen Körperabschnitt 30 auf, welcher in der Radialrichtung 10 über den Flansch 14 hinausragt.

Des Weiteren weist der Anschlussabschnitt 5, genauer der Körperabschnitt 30 des Anschlussabschnitts 5, zwei Vorsprünge 18 auf, welche eingerichtet sind, Enden 29, 44 der Wicklung 2 zu halten. Dabei wird die elektrische Wicklung 2 um die Vorsprünge 18 gewickelt. Diese Enden der elektrischen Wicklung 2 werden, insbesondere vor dem Umwickeln der elektrischen Wicklung 2 um den Spulenkörper 3, um die Vorsprünge 18 gewickelt, sodass der Wicklungsanschluss 4 die elektrische Wicklung 2 sicher hält, während sie um den Spulenkörper 3 gewickelt wird. Die Vorsprünge 18 bilden, wie in den Figuren 1 bis 3 dargestellt, zusammen mit dem Körperabschnitt 30 eine Kreuz-Form.

Der Anschlussabschnitt 5 weist außerdem zwei Haltenasen 31 auf, um welche die elektrische Wicklung 2 gewickelt wird. Die Haltenasen 31 verhindern dadurch ein Abrutschen der elektrischen Wicklung 2 von dem Anschlussabschnitt 5 bzw. von dem Körperabschnitt 30.

Der Anschlussabschnitt 5 weist zusätzlich dazu Klemmbereiche 32 auf, in welche die elektrische Wicklung 2 eingeklemmt wird oder werden kann. Außerdem weist der Anschlussabschnitt 5 zwei weitere Haltenasen 33 auf, welche die elektrische Wicklung 2 zu den Vorsprüngen 18 führen.

Nachdem das erste Ende 29 der elektrischen Wicklung 2 wie vorstehend beschrieben an dem Anschlussabschnitt 5, insbesondere durch Umwickeln des Vorsprungs 18 (links in Figur 3), fixiert wird, wird die elektrische Wicklung 2 in den Kanal 28 gelegt. Daraufhin wird die elektrische Wicklung 2 um den Spulenkörper 3 gewickelt. Nach Abschluss der Umwicklung des Spulenkörpers 3 wird das zweite Ende 44 der elektrischen Wicklung 2 ebenfalls um den Anschlussabschnitt 5 gewickelt. Dabei wird das zweite Ende 44 um einen weiteren Vorsprung 18 (rechts in Figur 3) gewickelt.

In Figur 3 ist zur vereinfachten Darstellung lediglich eine Lage der elektrischen Wicklung 2 dargestellt. Das heißt, dass der Spulenkörper 3 in Figur 3 lediglich einmal umwickelt wurde. Es versteht sich jedoch, dass der Spulenkörper 3 von einer großen Vielzahl an Lagen der elektrischen Wicklung 2 umwickelt sein kann.

Des Weiteren weist der Anschlussabschnitt 5 eine an jedem Vorsprung 18 angeordnete Aufnahme 19 für einen Kontaktanschluss (nicht dargestellt) auf, welcher nachstehend erläutert wird. Der Kontaktanschluss kontaktiert die elektrische Wicklung 2 in einem in der Aufnahme 19 eingeführten Zustand und ermöglicht dadurch einen Anschluss der elektrischen Wicklung 2.

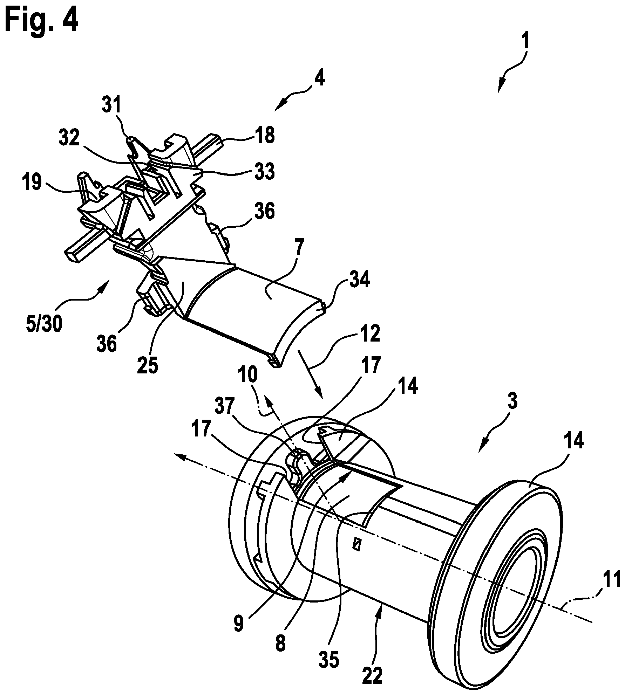

Figur 4 zeigt eine perspektivische schematische Ansicht einer Spulenvorrichtung 1 gemäß einer zweiten Ausführungsform der vorliegenden Erfindung.

Der Flansch 14, an welchem der Wicklungsanschluss 4 befestigt wird, weist hierbei einen Ausschnitt 17 auf. Wie der Figur 4 zu entnehmen ist geht der Ausschnitt 17 des Flansches 14 in die Vertiefung 9 des Außenflächenabschnitts 8 des Spulenkörpers 3 über. Mit anderen Worten erstreckt sich der Ausschnitt 17 des Flansches 14 in Radialrichtung 10 und ist mit der sich parallel zur Längsachse 11 erstreckenden Vertiefung 9 verbunden.

Des Weiteren weisen der Wicklungsanschluss 4 und der Spulenkörper zwei Nut-Schienen-Verbindungen 34, 35, 37 auf. Dabei ist eine erste Nut-Schienen-Verbindung 34, 35 durch einen Klemmhaken 34 an einem Ende (gegenüber von dem Anschlussabschnitt 5) des Befestigungsabschnitts 7 und einer Nut 35 in dem Außenflächenabschnitt 8 des Spulenkörpers 3 gebildet. Eine weitere Nut-Schienen-Verbindung 37 ist durch ein Klemmelement 37 des Spulenkörpers 3 gebildet, welches in eine aufgrund der perspektivischen Darstellung nicht dargestellten, dem Klemmelement 37 entsprechenden Aussparung des Wicklungsanschlusses 4 passt bzw. eingeführt wird.

Hierbei wird der Wicklungsanschluss 4 ebenfalls in Radialrichtung 10 an dem Spulenkörper 3 befestigt bzw. arretiert. Hierfür weist der Wicklungsanschluss 4 zusätzlich zwei Hintergreifungen 36 auf, welche den Flansch 14 an dem Ausschnitt 17 des Flansches 14 hintergreifen.

Die in Figur 4 dargestellte zweite Ausführungsform der Spulenvorrichtung 1 wird ebenso wie in Figur 3 dargestellt nach dem Zusammenfügen des Wicklungsanschlusses 4 mit dem Spulenkörper 3 mit der elektrischen Wicklung 2 umwickelt.

Obwohl in Figur 4 lediglich ein Anschlussabschnittsvorsprung 25 dargestellt ist, kann der Wicklungsanschluss 4 wie in den Figuren 1 und 2 dargestellt zwei Anschlussabschnittsvorsprünge 25, 26 aufweisen.

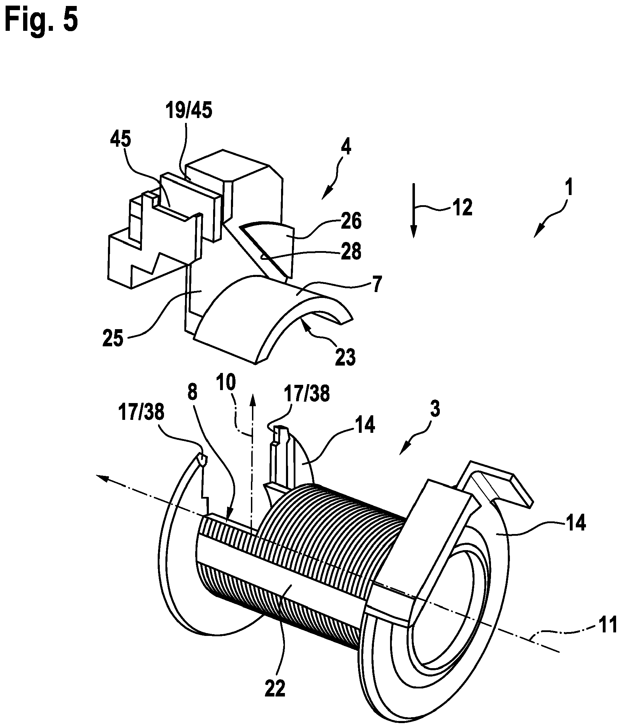

Figur 5 zeigt eine perspektivische schematische Ansicht einer Spulenvorrichtung 1 gemäß einer dritten Ausführungsform der vorliegenden Erfindung
Hierbei weist der Flansch 14 den vorstehend erläuterten Ausschnitt 17 auf. Zusätzlich dazu ist ein Großteil des Außenflächenabschnitts 8 ebenfalls ausgespart bzw. ausgeschnitten. Dabei liegt die untere Fläche 23 des Befestigungsabschnitts 7 lediglich an den Rändern des Außenflächenabschnitts 8 an.

Wie außerdem der Figur 5 zu entnehmen ist weist der Wicklungsanschluss 4 keine Vorsprünge 18 auf. Die elektrische Wicklung 2 wird hierbei zwischen Führungsbereiche 45 des Wicklungsanschlusses 4 gelegt und durch diese geführt.

Seitenflächen 38 des Ausschnitts 17 hintergreifen hierbei die Anschlussabschnittsvorsprünge 25, 26 des Wicklungsanschlusses 4, um den Wicklungsanschluss 4 insbesondere gegen eine Verschiebung entlang der Längsachse 11 zu sichern. In einer alternativen Ausgestaltung können die Seitenflächen 38 des Ausschnitts 17 in Nuten (nicht dargestellt) des Wicklungsanschlusses 4 greifen.

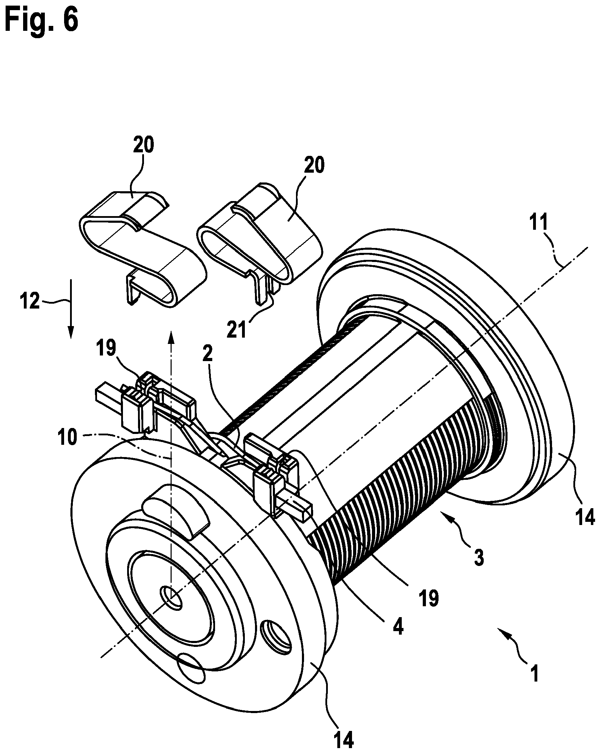

Nachfolgend werden anhand der Figuren 6, 7, 8 und 9 Kontaktanschlüsse 20 der Spulenvorrichtung 1 erklärt.

Die Figur 6 zeigt eine perspektivische schematische Ansicht einer Spulenvorrichtung 1 gemäß einer vierten Ausführungsform der vorliegenden Erfindung.

Die Kontaktanschlüsse 20 sind hierbei im Wesentlichen S-förmig und sind als Federkontakte ausgestaltet.

Die Kontaktanschlüsse 20 weisen hierbei Schneiden 21 auf. Zum Anschließen der elektrischen Wicklung 2, beispielsweise an externe Steuerungsschaltungen, werden die Kontaktanschlüsse 20 jeweils in eine der Aufnahmen 19 gesteckt. Dabei schneidet die jeweilige Schneide 21 einen Isolationsmantel der elektrischen Wicklung 2 durch, um im elektrischen Kontakt mit einem elektrischen Leiter der elektrischen Wicklung 2 zu sein.

Alternativ dazu können die in Figur 6 dargestellten Kontaktanschlüsse 20 anstelle der Schneiden 21 die elektrische Wicklung 2 lediglich einklemmend aufnehmen. Dafür weist die elektrische Wicklung 2 an den Aufnahmen 19 keinen Isolationsmantel auf.

Wie außerdem ein Vergleich der Figur 6 mit der Figur 3 zeigt können die Endabschnitte der elektrischen Wicklung 2, welche um die Vorsprünge 18 gewickelt sind, nach dem vollständigen Umwickeln des Spulenkörpers 3, insbesondere nach dem Kontaktieren mit den Kontaktanschlüssen 20, entfernt werden.

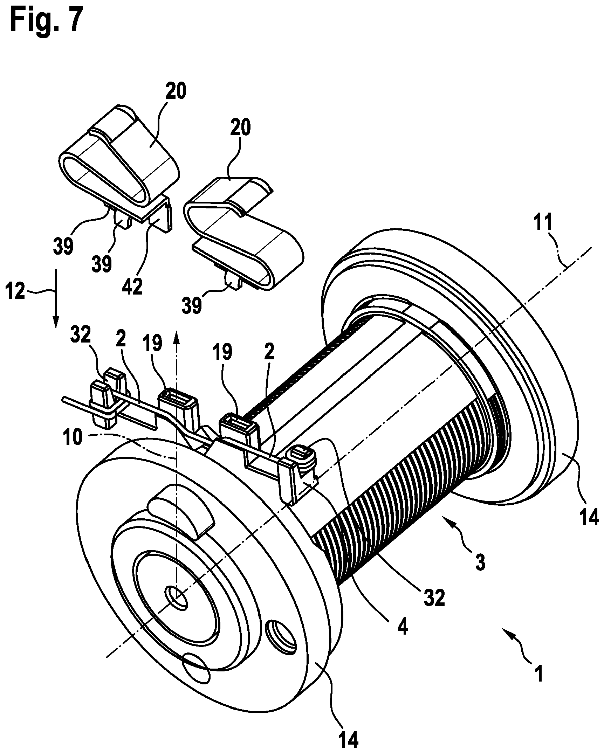

Die Figur 7 zeigt eine perspektivische schematische Ansicht einer Spulenvorrichtung 1 gemäß einer fünften Ausführungsform der vorliegenden Erfindung.

Wie darin zu erkennen ist weist der Wicklungsanschluss 4 hierbei keine kreuzförmigen Vorsprünge 18 (siehe Figur 3) auf. Vielmehr sind an den Enden des Wicklungsanschlusses 4 Klemmbereiche 32 angeordnet, an welchen die elektrischen Wicklung 2 durch Umwickeln dieser eingeklemmt wird.

Die Kontaktanschlüsse 20 sind hierbei ebenfalls im Wesentlichen S-förmige Federkontakte. Die Kontaktanschlüsse 20 weisen Endbereiche 42 auf, welche in die Aufnahmen 19 gesteckt werden.

Des Weiteren weisen die Kontaktanschlüsse 20 Schweißlaschen 39 auf, welche die elektrische Wicklung 2 zwischen der Aufnahme 19 und dem Klemmbereich 32 kontaktieren. Die Schweißlaschen 39 werden mit der elektrischen Wicklung 2 durch einen Schweißprozess verschweißt. Dabei wird in einem ersten Schritt, dem sogenannten "Lackschmelzen", der Isolationsmantel der elektrischen Wicklung 2 entfernt bzw. geschmolzen. In einem zweiten Schritt wird die Schweißlasche 39 mit dem elektrischen Leiter der elektrischen Wicklung 2 verschweißt. Diese beiden Schritte werden bevorzugt gemeinsam, insbesondere innerhalb kurzer Zeit (mehrere ns bis mehrere µs), durchgeführt.

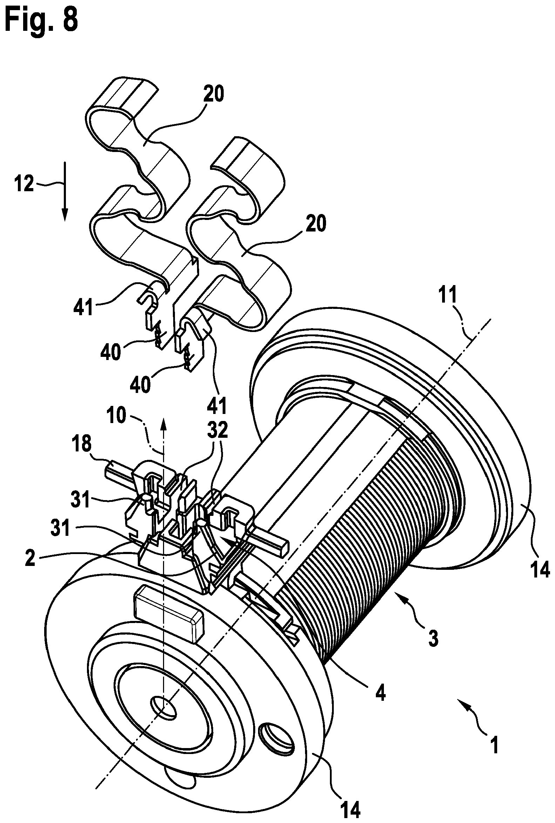

Die Figur 8 zeigt eine perspektivische schematische Ansicht einer Spulenvorrichtung 1 gemäß einer sechsten Ausführungsform der vorliegenden Erfindung.

Wie der Figur 8 zu entnehmen ist sind die Kontaktanschlüsse 20 hierbei ebenfalls Federkontakte und weisen eine Doppel-S-Form auf. Des Weiteren weisen die Kontaktanschlüsse 20 Kontaktflächen 40 und Schweißlaschen 41 auf, welche auf die elektrische Wicklung 2 zwischen den Haltenasen 31 und den Klemmbereichen 32 des Wicklungsanschlusses 4 gesetzt werden (vergleiche Wicklungsführung in Figur 3). Wie vorstehend beschrieben werden auch hierbei die Schweißlaschen 41 mit der elektrischen Wicklung 2 verschweißt.

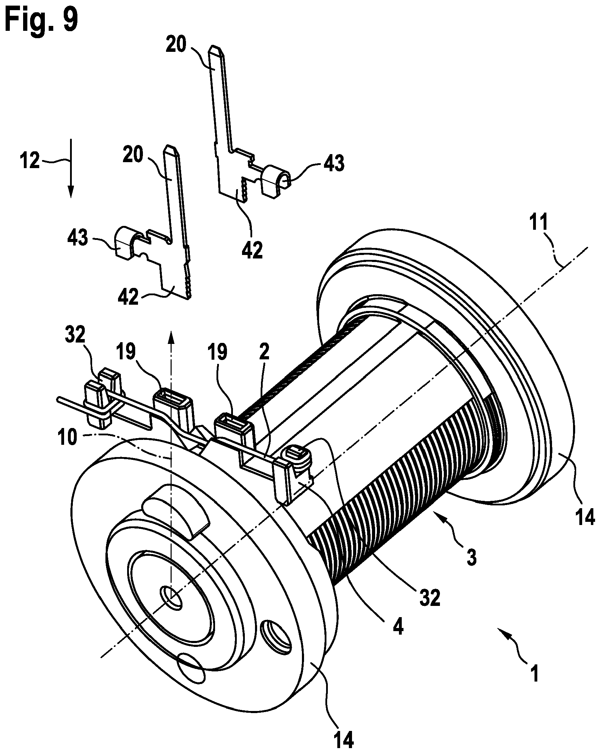

Die Figur 9 zeigt eine perspektivische schematische Ansicht einer Spulenvorrichtung 1 gemäß einer siebten Ausführungsform der vorliegenden Erfindung.

Wie der Figur 9 zu entnehmen ist sind die Kontaktanschlüsse 20 hierbei im Wesentlichen stiftförmig ausgestaltet. Dabei weisen die Kontaktanschlüsse 20 Endbereiche 42 auf, welche jeweils in eine Aufnahme 19 des Wicklungsanschlusses 4 gesteckt werden. Schweißlaschen 43 kontaktieren dabei die elektrische Wicklung 2, wobei sie die elektrische Wicklung 2 bedecken und mit dieser wie vorstehend beschrieben verschweißt werden.

Die vorstehend erläuterten Ausführungen der vorliegenden Erfindung können geeignet miteinander kombiniert werden. Beispielsweise können die in den Figuren 1, 4 und 5 unterschiedlich ausgestalteten Befestigungsabschnitte 7 mit den in den Figuren 1, 4, 5 und 6 bis 9 unterschiedlich ausgestalteten Anschlussabschnitte 5 des Wicklungsanschlusses 4 kombiniert werden. Die mit Bezug auf die Figuren 6 bis 9 erläuterten Kontaktanschlüsse 20 können miteinander sowie mit verschiedenen Befestigungsabschnitten 7 und/oder mit verschiedenen Wicklungsanschlüssen 4 geeignet kombiniert werden. Beispielsweise können alle in den Figuren 6 bis 9 dargestellten Kontaktanschlüsse zumindest eine Schneide 21 aufweisen. Die Kontaktmöglichkeiten, beispielsweise die Endbereiche 42 (Figuren 8 und 9) oder die Schweißlaschen 39, 41, 43 (Figuren 7 bis 9) können untereinander ausgetauscht werden und/oder können mit den verschiedenen Formen (S-Form, Doppel-S-Form, Stift-Form) kombiniert werden. Die Schweißlaschen 39, 41, 43 können ebenfalls mit zumindest einer Schneide 21 ausgestattet sein, wobei dann der Schritt des Lackschmelzens entfallen kann.

Die Führungsbereiche 45 (Figur 5) und/oder die Klemmbereiche 32 (beispielsweise Figur 3 oder Figur 9) können derart ausgestaltet sein, dass die elektrische Wicklung 2 in diesen geklemmt werden kann. Alternativ können diese derart ausgestaltet sein, dass die elektrische Wicklung 2 lediglich durch diese geführt wird ohne Klemmwirkung.

Neben der vorstehenden schriftlichen Beschreibung der Erfindung wird zu deren ergänzender Offenbarung hiermit explizit auf die zeichnerische Darstellung der Erfindung in den Fig. 1 bis 9 Bezug genommen.

### Bezugszeichenliste

- 1: Spulenvorrichtung
- 2: elektrische Wicklung
- 3: Spulenkörper
- 4: Wicklungsanschluss
- 5: Anschlussabschnitt
- 6: Ende der elektrischen Wicklung
- 7: Befestigungsabschnitt
- 8: Außenflächenabschnitt des Spulenkörpers
- 9: Vertiefung des Außenflächenabschnitts
- 10: Richtung senkrecht zur Längsachse
- 11: Längsachse des Spulenkörpers
- 12: Richtung senkrecht zur Längsachse
- 13: Dicke des Befestigungsabschnitts
- 14: Flansch
- 15: Nut
- 16: Schiene
- 17: Ausschnitt
- 18: Vorsprung
- 19: Aufnahme
- 20: Kontaktanschluss
- 21: Schneide
- 22: zylindrischer Abschnitt des Spulenkörpers
- 23: untere Fläche des Befestigungsabschnitts
- 24: obere Fläche des Befestigungsabschnitts
- 25: Anschlussabschnittsvorsprung
- 26: Anschlussabschnittsvorsprung
- 27: Ablagefläche
- 28: Kanal
- 29: erstes Ende der elektrischen Wicklung
- 30: Körperabschnitt des Wicklungsanschlusses
- 31: Haltenase
- 32: Klemmbereich
- 33: Haltenase
- 34: Klemmhaken
- 35: Nut
- 36: Hintergreifung
- 37: Klemmelement
- 38: Seitenfläche des Ausschnitts
- 39: Schweißlasche
- 40: Kontaktflächen
- 41: Schweißlasche
- 42: Endbereich
- 43: Schweißlasche
- 44: zweites Ende der elektrischen Wicklung
- 45: Führungsbereich

## Patentansprüche

1. Spulenvorrichtung (1) zur Aufnahme zumindest einer elektrischen Wicklung (2), insbesondere für eine Polrohrbaugruppe eines Magnetventils, eines Aktors oder einer Pumpe, aufweisend:
• einen Spulenkörper (3); und
• zumindest einen Wicklungsanschluss (4), welcher
• einen Anschlussabschnitt (5), welcher eingerichtet ist, in einem umwickelten Zustand des Spulenkörpers (3) zumindest ein Ende der elektrischen Wicklung (2) zu halten; und
• zumindest einen Befestigungsabschnitt (7) aufweist, welcher **dadurch gekennzeichnet** ist dazu eingerichtet zu sein, im umwickelten Zustand zwischen einem Außenflächenabschnitt (8) des Spulenkörpers (3) und der elektrischen Wicklung (2) geklemmt zu sein.

2. Spulenvorrichtung (1) nach Anspruch 1, wobei der Befestigungsabschnitt (7) eine dem Außenflächenabschnitt (8) des Spulenkörpers (3) entsprechende Form aufweist und in einem mit dem Spulenkörper (3) zusammengefügten Zustand, insbesondere im umwickelten Zustand, zumindest Teilweise an dem Außenflächenabschnitt (8) des Spulenkörpers (3) anliegt.

3. Spulenvorrichtung (1) nach Anspruch 1 oder 2, wobei der Außenflächenabschnitt (8) des Spulenkörpers (3) in einer Richtung (10) senkrecht zur Längsachse (11) des Spulenkörpers (3) vertieft ist, wobei eine Höhe der Vertiefung (9) des Außenflächenabschnitts (8) insbesondere einer Dicke (13) des Befestigungsabschnitts (7) entspricht.

4. Spulenvorrichtung (1) nach einem der vorherigen Ansprüche, wobei der Anschlussabschnitt (5) des Wicklungsanschlusses (4) im zusammengefügten Zustand, insbesondere im umwickelten Zustand, von dem Spulenkörper (3) vorragt, insbesondere im Wesentlichen senkrecht zur Längsachse (11) des Spulenkörpers (3) von dem Spulenkörper (3) vorragt.

5. Spulenvorrichtung (1) nach einem der vorherigen Ansprüche, wobei der Spulenkörper (3) zumindest einen Flansch (14) aufweist und der Anschlussabschnitt (5) des Wicklungsanschlusses (4) zumindest teilweise an dem Flansch (14) anliegt.

6. Spulenvorrichtung (1) nach Anspruch 5, wobei der Anschlussabschnitt (5) mittels einer Nut-Schienen-Verbindung (15, 16) an dem Flansch (14) befestigbar ist.

7. Spulenvorrichtung (1) nach Anspruch 6, wobei eine Nut (15) und eine Schiene (16) der Nut-Schienen-Verbindung (15, 16) in einer Richtung (12) senkrecht zu einer Längsrichtung des Spulenkörpers (3) verlaufen.

8. Spulenvorrichtung (1) nach Anspruch 6 oder 7, wobei der Flansch (14) einen Ausschnitt (17) aufweist und wobei der Anschlussabschnitt (5) des Wicklungsanschlusses (4) den Ausschnitt des Flansches (14) hintergreift.

9. Spulenvorrichtung (1) nach einem der vorherigen Ansprüche, wobei der Anschlussabschnitt (5) zumindest einen Vorsprung (18), welcher eingerichtet ist, das zumindest eine Ende (6) der Wicklung (2) zu halten, insbesondere klemmend zu halten, und zumindest eine in oder an dem Vorsprung (18) angeordnete Aufnahme (19) für einen Kontaktanschluss (20) aufweist, wobei der Kontaktanschluss (20) in einem in der Aufnahme (19) eingeführten Zustand die Wicklung (2) kontaktiert.

10. Spulenvorrichtung (1) nach Anspruch 9, wobei der Kontaktanschluss (20) zumindest eine Schneide (21) aufweist, welche eingerichtet ist, eine Isolation der Wicklung (2) durchzuschneiden, um im elektrischen Kontakt mit einem elektrischen Leiter der Wicklung (2) zu sein.

## Claims

1. Coil device (1) for receiving at least one electrical coil (2), in particular for a pole tube assembly of a solenoid valve, an actuator or a pump, having:
• a coil former (3); and
• at least one winding connection (4) which has
• a connection section (5) which is designed to hold at least one end of the electrical winding (2) when the coil former (3) is in a wrapped state; and
• at least one fastening section (7) which is **characterized by** being designed to be clamped between an outer surface section (8) of the coil former (3) and the electrical winding (2) in the wrapped state.

2. Coil device (1) according to Claim 1, wherein the fastening section (7) has a shape corresponding to the outer surface section (8) of the coil former (3) and in a state in which it is assembled with the coil former (3), in particular in the wrapped state, bears at least partially on the outer surface section (8) of the coil former (3).

3. Coil device (1) according to Claim 1 or 2, wherein the outer surface section (8) of the coil former (3) is recessed in a direction (10) perpendicular to the longitudinal axis (11) of the coil former (3), wherein a depth of the recess (9) of the outer surface section (8) corresponds in particular to a thickness (13) of the fastening section (7).

4. Coil device (1) according to one of the preceding claims, wherein the connection section (5) of the winding connection (4) projects from the coil former (3) in the assembled state, in particular in the wrapped state, in particular projects from the coil former (3) substantially perpendicularly to the longitudinal axis (11) of the coil former (3).

5. Coil device (1) according to one of the preceding claims, wherein the coil former (3) has at least one flange (14) and the connection section (5) of the winding connection (4) bears at least partially against the flange (14).

6. Coil device (1) according to Claim 5, wherein the connection section (5) can be fastened to the flange (14) by means of a groove-and-rail connection (15, 16).

7. Coil device (1) according to Claim 6, wherein a groove (15) and a rail (16) of the groove-and-rail connection (15, 16) run in a direction (12) perpendicular to a longitudinal direction of the coil former (3).

8. Coil device (1) according to Claim 6 or 7, wherein the flange (14) has a cutout (17) and wherein the connection section (5) of the winding connection (4) engages behind the cutout in the flange (14).

9. Coil device (1) according to one of the preceding claims, wherein the connection section (5) has at least one projection (18), which is designed to hold, in particular hold in a clamping manner, the at least one end (6) of the winding (2), and at least one receptacle (19), which is arranged in or on the projection (18), for a contact connection (20), wherein the contact connection (20) contacts the winding (2) in a state in which it is inserted in the receptacle (19).

10. Coil device (1) according to Claim 9, wherein the contact connection (20) has at least one blade (21) which is designed to cut through an insulation of the winding (2) in order to be in electrical contact with an electrical conductor of the winding (2).

## Revendications

1. Dispositif (1) de bobine destiné à recevoir au moins un enroulement électrique (2), en particulier pour un ensemble de tube polaire d'une électrovanne, d'un actionneur ou d'une pompe, comprenant :
• un corps de bobine (3) ; et
• au moins un raccordement d'enroulement (4), qui est
• une partie de raccordement (5), qui est conçue pour maintenir au moins une extrémité de l'enroulement électrique (2) dans un état d'enroulement du corps de bobine (3) ; et
• au moins une partie de fixation (7), **caractérisée en ce qu'**elle est conçue pour, à l'état d'enroulement, être serrée entre une partie de surface extérieure (8) du corps de bobine (3) et l'enroulement électrique (2).

2. Dispositif (1) de bobine selon la revendication 1, dans lequel la partie de fixation (7) présente une forme correspondant à la partie de surface extérieure (8) du corps de bobine (3) et, dans un état d'assemblage avec le corps de bobine (3), en particulier dans l'état d'enroulement, s'appuie au moins en partie sur la partie de surface extérieure (8) du corps de bobine (3).

3. Dispositif (1) de bobine selon la revendication 1 ou la revendication 2, dans lequel la partie de surface extérieure (8) du corps de bobine (3) est en creux dans une direction (10) perpendiculaire à l'axe longitudinal (11) du corps de bobine (3), une hauteur du creux (9) de la partie de surface extérieure (8) correspondant notamment à une épaisseur (13) de la partie de fixation (7).

4. Dispositif (1) de bobine selon l'une des revendications précédentes, dans lequel la partie de raccordement (5) du raccordement d'enroulement (4) fait saillie du corps de bobine (3) à l'état d'assemblage, notamment à l'état d'enroulement, notamment sensiblement perpendiculairement à l'axe longitudinal (11) du corps de bobine (3).

5. Dispositif (1) de bobine selon l'une des revendications précédentes, dans lequel le corps de bobine (3) comporte au moins un flasque (14) et la partie de raccordement (5) du raccordement d'enroulement (4) est au moins partiellement en appui contre le flasque (14).

6. Dispositif (1) de bobine selon la revendication 5, dans lequel la partie de raccordement (5) est apte à être fixée au flasque (14) au moyen d'une liaison rainure-rail (15, 16).

7. Dispositif (1) de bobine selon la revendication 6, dans lequel une rainure (15) et un rail (16) de la liaison rainure-rail (15, 16) s'étendent dans une direction (12) perpendiculaire à une direction longitudinale du corps de bobine (3).

8. Dispositif (1) de bobine selon la revendication 6 ou la revendication 7, dans lequel le flasque (14) présente une découpe (17) et dans lequel la partie de raccordement (5) du raccordement d'enroulement (4) s'engage derrière la découpe du flasque (14).

9. Dispositif (1) de bobine selon l'une des revendications précédentes, dans lequel la partie de raccordement (5) présente au moins une saillie (18) qui est conçue de façon à maintenir, en particulier à maintenir par serrage, ladite au moins une extrémité (6) de l'enroulement (2), et au moins un logement (19) pour un raccordement de contact (20) disposé dans ou sur la saillie (18), le raccordement de contact (20) étant en contact avec l'enroulement (2) dans un état d'insertion dans le logement (19).

10. Dispositif (1) de bobine selon la revendication 9, dans lequel le raccordement de contact (20) comprend au moins un organe de coupe (21) qui est agencé de façon à découper une isolation de l'enroulement (2) afin d'être en contact électrique avec un conducteur électrique de l'enroulement (2).
